# FASCICULE DE BREVET EUROPEEN

(11) **EP 3 084 521 B1**
(45) Date de publication et mention de la délivrance du brevet: **05.08.2020**
(21) Numéro de dépôt: 14828183.5
(22) Date de dépôt: 18.12.2014
(51) Int. Cl.: G03B 21/20, H04N 9/00, G02B 5/30, G02B 27/01

(54) **SYSTÈME ET PROCÉDÉ DE PROJECTION D'IMAGE ET AFFICHEUR UTILISANT LEDIT SYSTÈME**
VERFAHREN UND VORRICHTUNG ZUR PROJEKTION EINES BILDES UND ANZEIGE MIT BESAGTEM SYSTEM
SYSTEM AND METHOD FOR PROJECTING AN IMAGE AND DISPLAY USING SAID SYSTEM

(30) Priorité: 20.12.2013 FR 1303042
(43) Date de publication de la demande: 26.10.2016
(73) Titulaire: Valeo Comfort and Driving Assistance, 94046 Créteil Cedex (FR)
(72) Inventeur: IRZYK, Michael, 94046 Créteil Cedex (FR)
(86) Numéro de dépôt international: PCT/FR2014/000289
(87) Numéro de publication internationale: WO 2015/092166

(56) Documents cités:
- WO-A1-01/88606
- WO-A1-95/20180
- US-A1- 2005 190 345
- US-A1- 2013 293 591
- US-B1- 6 476 966

## Description

### 1. Domaine technique de l'invention

L'invention concerne un système de projection d'image et un afficheur utilisant ledit système.

L'invention trouvera ses applications, par exemple, dans les véhicules automobiles pour informer les utilisateurs du véhicule, en particulier son conducteur.

Il est connu d'équiper un véhicule automobile avec un système d'affichage, dit tête haute. Un tel système est placé dans le champ de vision du conducteur automobile et affiche une information relative à l'état du véhicule automobile, du trafic ou autre.

Afin de ne pas perturber la conduite, il est nécessaire que la luminosité de l'image projetée soit adaptée à la luminosité ambiante. Il est en particulier nécessaire que la puissance optique de l'image projetée soit fortement différente lors d'un trajet diurne et d'un trajet nocturne ou lors d'un passage dans un tunnel.

Avec les afficheurs tête haute utilisant des diodes électroluminescentes, il a déjà été proposé de faire varier la luminosité de l'image projetée en contrôlant le courant d'alimentation des diodes. De tels dispositifs permettent une adaptation satisfaisante de la luminosité. Cependant, leur luminosité diurne reste insuffisante.

Pour pallier ce défaut, on connaît des afficheurs utilisant des sources lumineuses du type laser. Cependant l'adaptation de la luminosité offerte dans un tel cas en contrôlant la quantité de courant alimentant les sources ne permet pas de réduire suffisamment la puissance optique de l'image. A titre d'exemple, si l'on considère que l'on souhaite disposer d'une puissance optique de l'ordre de 10000 Cd/m2 dans des conditions de roulage diurne et de l'ordre de 5 Cd/m2 dans des conditions de roulage nocturne, on constate qu'il faut faire diminuer la luminosité d'un facteur 2000 lors d'un passage de l'une des conditions de roulage à l'autre.

De plus, dans le cadre d'un afficheur tête haute de véhicule, il est nécessaire pour des raisons de sécurité que cette diminution de la luminosité n'entraine pas de détérioration de l'image affichée, pour assurer une bonne lisibilité au conducteur des informations importantes qui peuvent y être affiché. Le document WO 95/20180 A1 divulgue un système d'affichage comportant un modulateur de lumière, une source de lumière, et un dispositif de régulation de l'intensité de la lumière provenant de la source.

### 2. Objectifs de l'invention

L'invention vise à pallier au moins certains des inconvénients des systèmes de projection d'image et afficheurs connus.

En particulier, l'invention vise aussi à fournir un système de projection d'image et un afficheur qui permettent d'atténuer de façon efficace la luminosité du faisceau lumineux destiné à la formation d'une image.

L'invention vise aussi à fournir, dans au moins un mode de réalisation de l'invention, un système de projection d'image et un afficheur qui permettent l'atténuation de la luminosité dudit faisceau sans dégradation de la qualité de l'image projetée et affichée par l'afficheur.

### 3. Exposé de l'invention

Pour ce faire, l'invention concerne un système de projection d'image, comprenant toutes les caractéristiques récitées dans la revendication 1. Des modes de réalisation additionnels sont définis dans les revendications dépendantes.

Un système selon l'invention permet donc d'atténuer le faisceau lumineux grâce à des moyens d'atténuation placés en aval du dispositif d'émission existant, sans modifications de celui-ci. Les moyens d'atténuation comportent une cellule à cristal liquide qui permet, sur commande, de modifier la direction de la polarisation du faisceau lumineux, ce qui assure l'atténuation de la luminosité du faisceau. La cellule à cristaux liquide est commandée par un signal électrique appliqué aux bornes de la cellule à cristal liquide, dont la valeur de tension modifie l'orientation de la polarisation : la polarisation et donc l'atténuation est fonction de la valeur absolue de la tension aux bornes du cristal. L'utilisation d'un signal électrique alternatif entre deux niveaux de tension permet de modifier régulièrement la valeur de tension pour éviter les dégradations très rapides de la cellule à cristal liquide qui adviennent si celle-ci est alimentée par un signal continu.

L'alternance entre les deux niveaux de tension se fait entre la projection de deux trames de l'image, pour éviter ainsi toute dégradation de l'image susceptible de poser des problèmes de sécurité si le système de projection est installé dans un afficheur tête haute de véhicule. Plusieurs trames peuvent êtres projetées entre deux alternances, et, de préférence, une seule trame est projetée entre deux alternances, autrement dit l'alternance a lieu entre chaque projection de trames.

Avantageusement et selon une variante de l'invention, le dispositif d'émission du faisceau lumineux comprend au moins une diode laser.

Avantageusement et selon une autre variante de l'invention, le dispositif d'émission du faisceau lumineux est une cellule de type écran à cristaux liquides comprenant un transistor en film mince, éclairée par un rétro-éclairage.

Ces deux variantes sont des technologies fréquemment utilisées dans le domaine de la projection et l'affichage d'image : la diode laser est utilisée seule pour un faisceau lumineux monochromatique, ou en combinaison de trois diodes laser pour un faisceau lumineux polychromatique classique. La technologie écran à cristaux liquides comprenant un transistor en couches minces est communément appelée TFT-LCD (pour *Thin-film Transistor Liquid Cristal Display*). Le rétro-éclairage est effectuée généralement par le biais d'une diode électroluminescente (LED). Les deux variantes ont pour avantage d'offrir une luminosité suffisante pour un système selon l'invention, et d'émettre une lumière polarisée, ce qui permet de ne pas avoir à polariser le faisceau en aval du dispositif d'émission.

Avantageusement et selon l'invention, la moyenne de la tension du signal alternatif est nulle.

Selon cet aspect de l'invention, la durée de vie de la cellule à cristal liquide est améliorée par rapport à l'utilisation d'un signal alternatif continu ou alternatif avec une moyenne non nulle qui dégrade plus rapidement la cellule à cristal liquide.

Selon le mode de réalisation principal de l'invention, les deux niveaux de tension sont de valeurs absolues égales et de signes opposés.

Selon cet aspect de l'invention, les deux niveaux de tension ont la même valeur absolue ce qui permet d'obtenir le même résultat au niveau de la direction de la polarisation engendrée par la cellule à cristal liquide. Ainsi, l'alternance du signal ne modifie pas la direction de la polarisation, et donc ne modifie pas l'atténuation du faisceau lumineux.

Avantageusement et selon l'invention, le signal alternatif est périodique.

Selon cet aspect de l'invention, on peut utiliser comme générateur de signal un générateur de signal alternatif périodique classique bien connu de l'homme du métier, et ainsi régler facilement la fréquence du signal alternatif de pilotage de la cellule à cristal liquide.

Avantageusement et selon ce dernier aspect de l'invention, la fréquence du signal alternatif périodique est égale à la moitié de la fréquence de projection des trames de l'image.

Selon cet aspect de l'invention, les basculements du signal alternatif périodique d'un niveau de tension à l'autre ont lieu entre chaque projection de trame.

L'invention concerne aussi un afficheur, notamment un afficheur tête haute, comprenant un système de projection d'image selon l'invention.

Un afficheur selon l'invention permet d'afficher l'image projetée par le système de projection d'image. Dans le cas d'un afficheur tête haute installé par exemple dans un véhicule, l'afficheur permet au conducteur du véhicule d'avoir dans son champ de vision des informations relatives à la conduite, au véhicule et/ou à l'environnement.

L'invention concerne aussi un procédé de projection d'image, ledit procédé comprenant les étapes de la revendication 8.

### 4. Description des figures

D'autres buts, caractéristiques et avantages de l'invention apparaîront à la lecture de la description suivante donnée à titre uniquement non limitatif et qui se réfère aux figures annexées dans lesquelles :
- La figure 1 est une vue schématique d'un dispositif d'émission et de moyens d'atténuation d'un système de projection d'image selon un mode de réalisation de l'invention, dans plusieurs modes de fonctionnement a), b) et c),
- La figure 2 est un exemple de courbe représentant la puissance optique du faisceau, exprimée en pourcentage en ordonnée, en fonction de la tension appliquée aux bornes d'une cellule à cristal liquide d'un système selon l'invention, exprimée en Volts en abscisse,
- La figure 3 est un diagramme temporel représentant la succession de trames (a) et le signal alternatif (b) pilotant la cellule à cristaux liquide des moyens d'atténuation du système selon l'invention, en fonction du temps t en abscisse,
- La figure 4 représente une vue schématique d'un système de projection d'image et d'un afficheur tête haute selon l'invention.

### 5. Description détaillée d'un mode de réalisation de l'invention

Il faut noter que les figures exposent l'invention de manière détaillée pour mettre en œuvre l'invention, lesdites figures pouvant bien entendu servir à mieux définir l'invention le cas échéant.

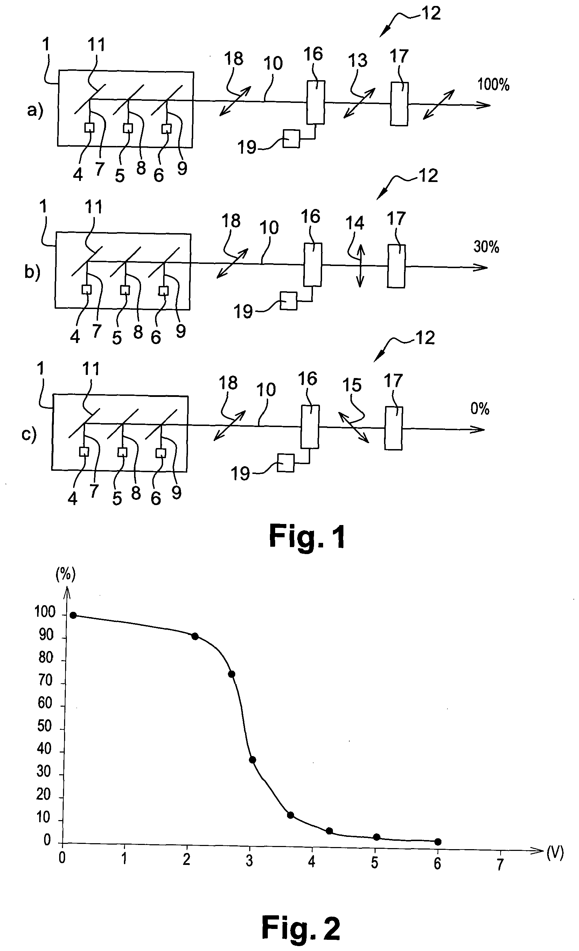

Comme illustré à la figure 1 dans les modes de fonctionnement a), b) et c), l'invention concerne tout d'abord un système de projection comprenant un dispositif 1 d'émission d'un faisceau lumineux, destiné à former une image. Un tel dispositif est plus particulièrement destiné à équiper un afficheur tête haute d'un véhicule automobile, où au moins une information en rapport avec le véhicule est projetée.

Ledit dispositif comprend une ou plusieurs sources 4, 5, 6 émettant chacune un faisceau 7, 8, 9 du type laser. Il s'agit, par exemple, de sources laser, typiquement des diodes laser, chaque source laser émettant un faisceau monochromatique, c'est-à-dire consistant en une seule longueur d'onde.

Ledit dispositif comprend ici une pluralité de sources 4, 5, 6, en l'occurrence trois, ledit dispositif étant configuré pour former le faisceau lumineux 10 à l'aide d'une mise en commun par combinaison des faisceaux 7, 8, 9 individuellement émis par chacune desdits sources 4, 5, 6. Plus précisément, il pourra s'agir de sources émettant un faisceau d'une couleur différente d'une source à l'autre. Les couleurs sont, par exemple, un rouge, un vert ou un bleu (RVB).

La puissance optique de chacune des sources est pilotée, de manière indépendante, à l'aide du courant d'alimentation de la ou des sources laser. A puissance optique donnée, la couleur du faisceau lumineux 10 est déterminée par la manière dont un ratio de puissance est établi entre les différentes diodes laser. Par exemple, pour obtenir une lumière blanche, les puissances optiques, en proportion, doivent être établies selon la distribution suivante : 60 pour la diode verte, 30 pour la diode bleue, 10 pour la diode rouge. Comme développé plus loin, la puissance optique de chacune des sources pourra également être pilotée pour moduler la puissance optique du faisceau lumineux 10.

Les faisceaux 7, 8, 9 émis par chacune des sources sont orientés, par exemple, parallèlement les uns aux autres et réfléchis dans une même direction pour former par combinaison ledit faisceau lumineux commun 10. Ledit dispositif 1 comprend ici à cette fin des éléments optiques semi-transparent, sur une plage de longueur d'onde, tels que des miroirs dichroïques ou lames de combinaison 11, interceptant les faisceaux 7, 8, 9 émis par chacune desdites sources et les combinant selon la direction dudit faisceau 10.

De façon plus générale, ledit dispositif 1 est configuré pour former ledit faisceau lumineux 10 à partir du ou desdits faisceaux laser 7, 8, 9, quel que soit le nombre de sources 4, 5, 6 en jeu. En cas de source unique, le faisceau lumineux 10 est composé du faisceau laser émis par la seule source employée et l'image obtenue sera alors monochrome, composée des différents niveaux de puissances optiques appliquées à chacun des points qui la compose, selon un dégradé de ladite couleur. En cas de pluralité de sources, typiquement les trois sources 4, 5, 6 évoquées plus haut, ledit faisceau commun 10 qui forme alors ledit faisceau lumineux permettra l'établissement d'une image selon un spectre de couleur dont la résolution correspondra à la finesse de pilotage de l'alimentation desdites sources 4, 5, 6.

Selon l'invention, le système de projection d'image comprend des moyens 12 d'atténuation, situés en aval de la ou desdites sources 4, 5, 6, permettant de faire varier la puissance optique du faisceau lumineux 10. Autrement dit, une couleur et/ou une intensité étant conférées au faisceau lumineux 10 par le contrôle de l'alimentation en courant des sources, lesdits moyens 12 d'atténuation permettent de faire varier la puissance optique du ou des faisceaux 7, 8, 9, 10. On pourra en particulier adapter la puissance optique du faisceau à des conditions de roulage diurne et des conditions de roulage nocturne.

Ledit dispositif pourra comprendre des moyens de pilotage de l'alimentation en courant desdites sources. Comme évoqué plus haut, ils pourront permettre un choix de la couleur du faisceau lumineux 10.

Plus précisément, lesdits moyens de pilotage sont configurés, par exemple, pour assurer une régulation linéaire en courant de la puissance optique desdits faisceaux laser 7, 8, 9 de façon à assurer ledit choix de couleur du faisceau lumineux 10, selon une proportion de puissance optique attribuée à chacun desdits faisceaux laser 7, 8, 9. On pourra, par exemple, prévoir un codage de la couleur sur six bits, correspondant à soixante quatre niveaux de puissance optique pour chacun desdits faisceaux laser 7, 8, 9.

Lesdits moyens de pilotage pourront aussi être configurés pour assurer un complément de réglage de la puissance optique dudit faisceau lumineux. On peut de la sorte atteindre un taux d'atténuation particulièrement élevé.

Plus précisément, lesdits moyens de pilotage sont configurés pour assurer une régulation par modulation de largeur d'impulsion de la puissance optique desdits faisceaux laser 7, 8, 9 de façon à réaliser ledit complément de réglage de la puissance optique dudit faisceau lumineux 10, notamment selon un facteur d'atténuation compris entre 5 et 20, en particulier d'environ 10.

On peut de la sorte régler la couleur et/ou la puissance optique dudit faisceau lumineux 10. Lesdits moyens de pilotage comprennent, par exemple, un micro contrôleur, non représenté.

De façon avantageuse, lesdits moyens 12 d'atténuation sont configurés pour faire varier la puissance optique du faisceau lumineux en fonction d'une orientation d'une polarisation du ou desdits faisceaux. On profite de la sorte d'une particularité physique des faisceaux laser, à savoir qu'ils présentent la propriété d'être fortement polarisés. Pour simplifier, on considère en effet qu'il existe un rapport de 200/1 entre la luminosité associée à chacune des deux composantes orthogonales de la polarisation d'un faisceau laser. On peut de la sorte obtenir un facteur d'atténuation d'environ 200 qui, combiné au facteur d'atténuation provenant des moyens de pilotage, en particulier de la modulation de largeur d'impulsion, permettra d'atteindre le niveau de 2000 évoqué plus haut.

Selon le mode de réalisation illustré, lesdits moyens 12 d'atténuation comprennent des moyens 16 de modification de l'orientation de la polarisation du ou desdits faisceaux et, en aval, un moyen assurant la variation de la puissance optique du ou desdits faisceaux lumineux en fonction de l'orientation de ladite polarisation, ici un analyseur 17 transmettant uniquement une des composantes de la polarisation du ou desdits faisceaux. Ici, le faisceau 10 présente, avant passage à travers les moyens 16 de modification de l'orientation, une orientation initiale 18. Dans le mode de fonctionnement a), lesdits moyens 16 de modification de l'orientation de la polarisation laissent passer le faisceau sans changer l'orientation de sa polarisation et l'orientation 13 obtenue en sortie desdits moyens de modification permet une transmission avoisinant 100% du faisceau à travers l'analyseur 17. Dans le mode de fonctionnement b), lesdits moyens 16 de modification de l'orientation de la polarisation font subir un changement d'orientation de la polarisation selon un premier angle et l'orientation 14 obtenue en sortie desdits moyens 16 de modification permet une transmission de 30% du faisceau à travers l'analyseur 17. Dans le mode de fonctionnement c), lesdits moyens 16 de modification de l'orientation de la polarisation font subir un changement d'orientation de la polarisation de façon à ce que la nouvelle orientation 15 obtenue soit décalée orthogonalement à l'orientation de la polarisation du faisceau 10 incident. La transmission du faisceau à travers l'analyseur 17 est alors minimum, symbolisée par le chiffre de 0%.

Lesdits moyens 16 de modification de l'orientation de la polarisation comprennent, par exemple, des moyens à cristaux liquides tel qu'une cellule à cristal liquide. Ledit analyseur 17 est, par exemple, un film polarisant.

Dans un autre mode de réalisation, le dispositif d'émission peut être composé d'un écran à cristal liquide comprenant un transistor en film mince (TFT-LCD pour *Thin Film Transisor Liquid Cristal Display*). Cet écran à cristal liquide est rétroéclairé par des diodes électroluminescentes (DEL ou LED). Un tel dispositif fournit également un faisceau lumineux fortement polarisé, du fait de la présence de films de polarisation dans l'écran à cristal liquide.

Dans la suite de la description, les moyens 16 de modification de l'orientation de la polarisation sont une cellule à cristal liquide 16. La cellule à cristal liquide 16 est pilotée par un signal généré par un générateur de signal 19. La variation de la tension apportée par ce signal aux bornes de la cellule à cristal liquide 16 permet l'ajustement de la direction de la polarisation du faisceau lumineux 10 qui la traverse. Dans le cadre de l'invention, cette variation de la tension se traduit donc par une variation de la puissance optique du faisceau lumineux 10, du fait de l'atténuation de celui-ci par les moyens d'atténuations 12. La figure 2 est un graphique illustrant un exemple de cette variation de la puissance optique du faisceau lumineux 10, exprimée en pourcentage en fonction de la valeur absolue de la tension aux bornes de la cellule à cristal liquide 16, exprimée en Volts.

Une cellule à cristal liquide classique doit être pilotée par un signal alternatif. En effet, l'application d'un signal continu aux bornes d'une cellule à cristal liquide a pour effet de réduire considérablement la durée de vie de celle-ci. De plus, l'application à une cellule à cristal liquide de tensions opposées, c'est-à-dire de même valeur absolue mais de signes différents, permet d'obtenir le même résultat en termes d'atténuation. Ainsi, on peut faire varier le signal de façon alternative.

L'image projetée par le système de projection d'image est de façon connue de l'homme du métier décomposée en trames projetées successivement, à une fréquence de projection donnée. Dans le cas d'une projection basée sur un balayage d'un écran par un faisceau lumineux dévié par un moyen de balayage, une trame correspond à un balayage complet de l'écran par le faisceau lumineux. Entre ces deux trames, le moyen de balayage doit revenir à sa position initiale pendant un intervalle de temps réduit durant lequel aucune trame n'est projetée. Ainsi, selon l'invention, l'alternance du signal alternatif entre les deux niveaux de tension est effectuée entre deux de ces projections de trame, pendant cet intervalle de temps où le faisceau n'est pas dévié sur l'écran par le moyen de balayage puisque celui-ci revient à sa position de départ. Ce faisant, on évite les déformations d'images qui adviennent lorsque l'alternance du signal s'effectue pendant la projection d'une trame. On obtient ainsi une image non dégradée, ce qui est essentiel pour l'utilisation du système de projection dans un afficheur tête haute à destination d'un véhicule automobile, pour des raisons de sécurité et de confort.

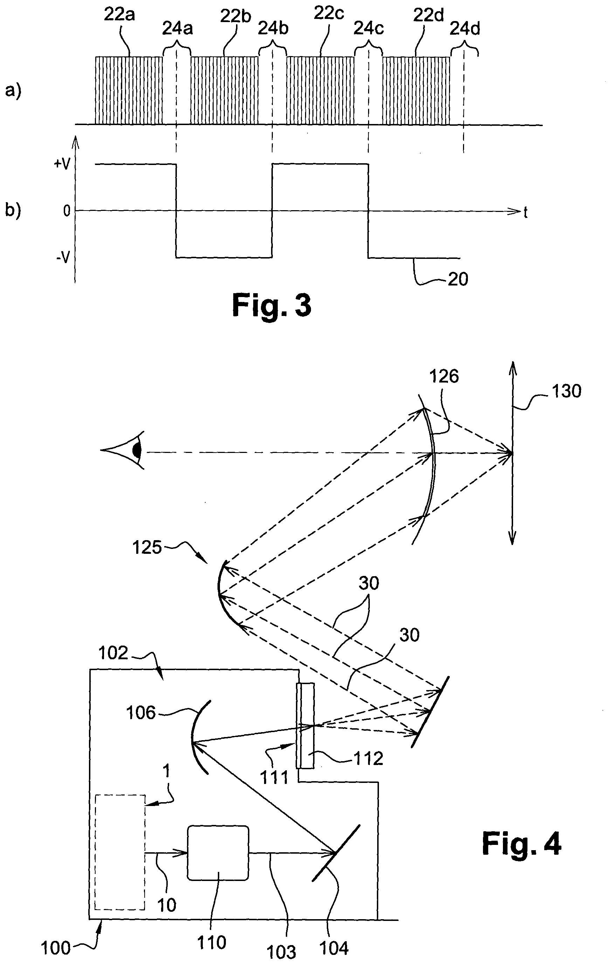

La figure 3b représente un tel signal alternatif utilisé par le système selon l'invention. Le signal est représenté par une courbe 20, exprimant la tension du signal en fonction du temps. Cette courbe 20 est mise en parallèle avec la succession de trames projetées par le système, en fonction du temps (figure 3a). Quatre trames 22a, 22b, 22c, 22d sont représentées, et après chaque trame et avant une nouvelle trame se déroule un intervalle de temps 24a, 24b, 24c, 24d, pendant lequel le moyen de balayage revient à sa position initiale et donc aucune trame n'est affichée. C'est à ce moment là que le signal peut alterner d'un niveau de tension à l'autre sans dégrader l'image. Dans le mode de réalisation représenté, l'alternance est effectuée entre chaque projection de trame, mais le signal peut aussi alterner toutes les deux, trois ou x trames, aussi bien qu'il peut alterner de façon irrégulière et non-périodique.

De préférence, le signal alternatif varie entre une valeur positive et une valeur négative opposée afin d'obtenir une atténuation constante.

De préférence aussi, la moyenne de la tension du signal alternatif est nulle. Cela permet d'augmenter davantage la durée de vie de la cellule à cristal liquide car une moyenne non nulle équivaut à utiliser un signal continu non nul qui endommage la cellule à cristal liquide.

De préférence encore, le signal est périodique. Un signal alternatif périodique est plus facilement généré par un générateur de signal classique connu de l'homme du métier. Avantageusement, la fréquence du signal est égale à la moitié de la fréquence de projection des trames. Par exemple, la fréquence de projection des trames pourra être de 60Hz et la fréquence du signal pourra être de 30Hz.

Le signal représenté par la courbe 20 de la figure 3b est donc un signal selon un mode de réalisation combinant les caractéristiques précitées : c'est un signal périodique, de moyenne nulle et dont les niveaux de tension +V et -V sont opposés. Sa fréquence est égale à la moitié de la fréquence de projection des trames, c'est-à-dire que l'alternance d'un niveau de tension à l'autre a lieu entre chaque projection de trame. Le signal représenté par la courbe 20 est un signal carré parfait, qui alterne directement entre les deux niveaux de tension et qui prend comme valeur seulement ces deux niveaux de tension, sans valeur intermédiaire. En pratique, un signal carré utilisé dans l'invention peut prendre des valeurs intermédiaires négligeables pendant un temps limité, durant les alternances d'un niveau de tension à l'autre.

Comme illustré à la figure 4 l'invention concerne aussi un afficheur tête haute comprenant un système 100 de projection d'image selon l'invention. Le système de projection 100 comporte, outre le dispositif d'émission d'un faisceau lumineux 1, des moyens 102 de formation d'une image à partir dudit faisceau lumineux 10.

Lesdits moyens 102 de formation d'image comprennent, par exemple, un générateur de balayage 110 dont la fonction est de déplacer horizontalement et verticalement le faisceau lumineux 10 en vue de fournir un faisceau 103 réalisant un balayage selon une fréquence, notamment égale à 60 Hz, à titre d'exemple non limitatif. Le générateur de balayage 110 comprend, par exemple, un miroir à balayage à système micro-électro-mécanique (ci-après appelé miroir MEMS) sur lequel le faisceau lumineux 10 se réfléchit en un faisceau de balayage 103. Un tel miroir MEMS présente par exemple un diamètre de 1 mm². Le miroir MEMS est apte à tourner autour de deux axes de rotation pour réaliser un balayage, par exemple à la fréquence de rafraîchissement de 60 Hz, d'un écran diffuseur 111 desdits moyens 102 de formation d'une image. Ladite image se forme alors sur ledit diffuseur 111. Alternativement, le miroir MEMS peut être remplacé par deux miroirs plans et déplaçables, dont les mouvements sont associés. L'un de ces miroirs peut être dédié à un balayage selon un axe horizontal alors que l'autre miroir peut être dédié à un balayage selon un axe vertical.

Le diffuseur 111 où se forme l'image pourra être un écran de projection transparent à structure complexe pour une projection par transparence. Il pourra alternativement être translucide. Il est réalisé, par exemple, en verre, notamment dépoli, ou en polycarbonate. A titre d'exemple, l'écran diffuseur est du type à pupille de sortie (« Exit Pupil Expander »). Il permet de disposer d'un cône d'observation élargi. Il s'étend dans un plan traversé par le faisceau lumineux, l'image résultant de ce faisceau de balayage 103 étant formée dans le plan d'une face de l'écran diffuseur 111.

Cet écran diffuseur reçoit le faisceau de balayage 103. Il est agencé pour provoquer une dispersion de ce faisceau de balayage 103 selon un secteur angulaire, par exemple, égal à 30° par rapport à la direction du faisceau de balayage 103 au moment où il vient frapper l'écran diffuseur 111. Pour ce faire, selon un exemple non limitatif, une face 112 de l'écran diffuseur est rugueuse, en ce sens qu'elle comporte des aspérités qui provoquent la dispersion du faisceau de balayage 103. La face rugueuse 112 correspond à celle par laquelle le faisceau sort, c'est-à-dire la face sur laquelle l'image se forme.

Selon une autre variante non illustré, lesdits moyens de formation d'image ne comportent pas de générateur de balayage, tel que précédemment décrit, mais une matrice de micro miroirs (aussi appelée Digital micro mirrors systems). Dans cette configuration l'image est formée au niveau de la matrice à micro miroirs puis projetée sur l'écran diffuseur. De manière générale, on place une optique de projection entre la matrice et l'écran. Chaque micro miroir correspond à un pixel de l'image. Dans ce mode de réalisation, l'image n'est pas formée sur l'écran diffuseur pour la première fois, mais reçoit une image préalablement formée sur la matrice à micro miroirs.

Il est à noter que lesdits moyens d'atténuation 12 peuvent être disposés en amont desdits moyens 102 de formation d'image, comme décrit figure 1. Ils peuvent encore être en aval. Dans une variante, ils pourront être placés entre le générateur de balayage 110 ou la matrice de micro miroirs, d'une part, et, d'autre part, l'écran diffuseur 111.

Ledit système de projection pourra encore comprendre différents miroirs 104, 106 plans ou concaves de sorte à focaliser les faisceaux vers l'écran diffuseur 111, placés notamment sur la trajectoire du faisceau de balayage 103.

L'invention concerne encore un afficheur, notamment tête haute, comprenant un système de projection 100 selon l'une quelconque des variantes détaillées ci-dessus.

En aval de l'écran diffuseur 111 selon le sens de déplacement du faisceau lumineux, ledit afficheur comprend au moins une lame semi-réfléchissante 126 et un dispositif de réflexion 125 interposé sur le trajet de l'image entre l'écran diffuseur 111 et la lame semi-réfléchissante 126, le dispositif de réflexion 125 comprenant un ou plusieurs miroirs plans ou concaves, comme représenté sur la figure 4. Sur cette figure, le trajet de l'image est symbolisé par trois flèches 30 en pointillé qui se réfléchissent sur le dispositif de réflexion 125 avant de s'afficher à travers la lame semi-réfléchissante 126. Cette dernière permet un grossissement et/ou, par transparence, un affichage de l'image au-delà de ladite lame semi-réfléchissante, notamment au-delà du pare-brise du véhicule équipé, au niveau d'un écran virtuel 130, obtenu à l'aide de ladite lame semi-réfléchissante 126.

Cette lame transparente présente un pouvoir de réflexion au moins égale à 20%, ce qui permet à l'utilisateur de voir au travers de la lame la route empruntée par le véhicule, tout en bénéficiant d'un contraste élevé permettant de voir l'image affichée. De manière alternative, l'affichage de l'image peut avoir lieu au niveau du pare-brise du véhicule équipé dudit afficheur.

Comme déjà dit, lesdits moyens d'atténuation 12 pourront être situés en aval du dispositif de formation d'image 102, ceci jusqu'à ladite lame semi-réfléchissante 126.

## Revendications

1. Système de projection d'image, comprenant un dispositif d'émission (1) d'un faisceau lumineux (10), des moyens de formation (102) d'une image à partir dudit faisceau lumineux (10), ladite image étant décomposée en trames (22a, 22b, 22c, 22d) projetées successivement par ledit système, **caractérisé en ce que** ledit système comprend des moyens d'atténuation (12) de la puissance optique du faisceau lumineux (10), les moyens d'atténuation (12) comprenant :
- une cellule à cristal liquide (16), apte à être pilotée par un signal alternatif entre deux niveaux de tension de valeurs absolues égales et de signes opposés, la cellule (16) assurant une modification de l'orientation d'une polarisation du faisceau lumineux (10) sous la commande du signal alternatif,
- un générateur de signal (19) générant le signal alternatif, ledit générateur de signal (19) basculant ledit signal alternatif d'un niveau de tension à l'autre entre les projections de deux trames successives de l'image,
- des moyens (17) assurant la variation de la puissance optique du faisceau lumineux (10) en fonction de l'orientation de ladite polarisation.

2. Système de projection d'image selon la revendication 1, **caractérisé en ce que** le dispositif d'émission (1) du faisceau lumineux (10) comprend au moins une diode laser.

3. Système de projection d'image selon la revendication 1, **caractérisé en ce que** le dispositif d'émission (1) du faisceau lumineux (10) est une cellule de type écran à cristaux liquides comprenant un transistor en couches minces, éclairée par un rétro-éclairage.

4. Système de projection d'image selon l'une des revendications précédentes, **caractérisé en ce que** la moyenne de la tension du signal alternatif est nulle.

5. Système de projection d'image selon l'une des revendications précédentes, **caractérisé en ce que** le signal alternatif est périodique.

6. Système de projection d'image selon la revendication 5, **caractérisé en ce que** la fréquence du signal alternatif est égale à la moitié de la fréquence de projection des trames de l'image.

7. Afficheur, notamment afficheur tête haute, **caractérisé en ce qu'**il comprend un système de projection d'image selon l'une des revendications précédentes.

8. Procédé de projection d'image, ledit procédé comprenant une étape d'émission d'un faisceau lumineux (10) et une étape de formation d'une image à partir dudit faisceau lumineux (10), ladite étape de formation d'une image étant décomposée en plusieurs sous-étapes successives de projection de trames de l'image, **caractérisé en ce que** ledit procédé comprend une étape d'atténuation du faisceau lumineux (10) par le pilotage d'un signal alternatif entre deux niveaux de tension de valeurs absolues égales et de signes opposés, le basculement du signal alternatif d'un niveau de tension à l'autre étant piloté entre les sous-étapes successives de projection de trames de l'image.

## Patentansprüche

1. System zur Projektion eines Bildes, welches eine Vorrichtung zum Aussenden (1) eines Lichtstrahls (10) und Mittel zur Erzeugung (102) eines Bildes aus dem Lichtstrahl (10) umfasst, wobei das Bild in Teilbilder (22a, 22b, 22c, 22d) zerlegt wird, die von dem System nacheinander projiziert werden, **dadurch gekennzeichnet, dass** das System Mittel zur Dämpfung (12) der optischen Leistung des Lichtstrahls (10) umfasst, wobei die Dämpfungsmittel (12) umfassen:
- eine Flüssigkristallzelle (16), die durch ein Signal steuerbar ist, das zwischen zwei Spannungspegeln mit gleichen absoluten Beträgen und entgegengesetzten Vorzeichen wechselt, wobei die Zelle (16) eine Änderung der Ausrichtung einer Polarisation des Lichtstrahls (10) unter der Steuerung des wechselnden Signals sicherstellt,
- einen Signalgenerator (19), der das wechselnde Signal erzeugt, wobei der Signalgenerator (19) das wechselnde Signal zwischen den Projektionen von zwei aufeinander folgenden Teilbildern des Bildes von einem Spannungspegel zum anderen umschaltet,
- Mittel (17), welche die Änderung der optischen Leistung des Lichtstrahls (10) in Abhängigkeit von der Ausrichtung der Polarisation sicherstellen.

2. System zur Projektion eines Bildes nach Anspruch 1, **dadurch gekennzeichnet, dass** die Vorrichtung zum Aussenden (1) des Lichtstrahls (10) wenigstens eine Laserdiode umfasst.

3. System zur Projektion eines Bildes nach Anspruch 1, **dadurch gekennzeichnet, dass** die Vorrichtung zum Aussenden (1) des Lichtstrahls (10) eine Zelle vom Typ eines einen Dünnschichttransistor umfassenden Flüssigkristallbildschirms ist, die durch eine Hintergrundbeleuchtung beleuchtet wird.

4. System zur Projektion eines Bildes nach einem der vorhergehenden Ansprüche, **dadurch gekennzeichnet, dass** der Mittelwert der Spannung des wechselnden Signals null ist.

5. System zur Projektion eines Bildes nach einem der vorhergehenden Ansprüche, **dadurch gekennzeichnet, dass** das wechselnde Signal periodisch ist.

6. System zur Projektion eines Bildes nach Anspruch 5, **dadurch gekennzeichnet, dass** die Frequenz des wechselnden Signals gleich der Hälfte der Projektionsfrequenz der Teilbilder des Bildes ist.

7. Anzeigevorrichtung, insbesondere Head-up-Display, **dadurch gekennzeichnet, dass** sie ein System zur Projektion eines Bildes nach einem der vorhergehenden Ansprüche umfasst.

8. Verfahren zur Projektion eines Bildes, wobei das Verfahren einen Schritt des Aussendens eines Lichtstrahls (10) und einen Schritt der Erzeugung eines Bildes aus dem Lichtstrahl (10) umfasst, wobei der Schritt der Erzeugung eines Bildes aus mehreren aufeinander folgenden Teilschritten der Projektion von Teilbildern des Bildes besteht, **dadurch gekennzeichnet, dass** das Verfahren einen Schritt der Dämpfung des Lichtstrahls (10) durch die Steuerung eines Signals umfasst, das zwischen zwei Spannungspegeln mit gleichen absoluten Beträgen und entgegengesetzten Vorzeichen wechselt, wobei das Umschalten des wechselnden Signals von einem Spannungspegel zum anderen zwischen den aufeinander folgenden Teilschritten der Projektion von Teilbildern des Bildes angesteuert wird.

## Claims

1. Image-projecting system comprising a device (1) for emitting a light beam (10), and means (102) for forming an image from said light beam (10), said image being decomposed into frames (22a, 22b, 22c, 22d) that are successively projected by said system, **characterized in that** said system comprises means (12) for attenuating the optical power of the light beam (10), the attenuating means (12) comprising:
- a liquid-crystal cell (16) able to be driven by a signal alternating between two voltage levels of equal absolute values and of opposite signs, the cell (16) ensuring a modification of the orientation of a polarization of the light beam (10) under the command of the alternating signal,
- a signal generator (19) that generates the alternating signal, said signal generator (19) switching said alternating signal from one voltage level to the other between the projections of two successive frames of the image,
- means (17) ensuring the variation in the optical power of the light beam (10) depending on the orientation of said polarization.

2. Image-projecting system according to Claim 1, **characterized in that** the device (1) for emitting the light beam (10) comprises at least one laser diode.

3. Image-projecting system according to Claim 1, **characterized in that** the device (1) for emitting the light beam (10) is a liquid-crystal-display cell comprising a thin-film transistor, the cell being backlit.

4. Image-projecting system according to one of the preceding claims, **characterized in that** the average of the voltage of the alternating signal is zero.

5. Image-projecting system according to one of the preceding claims, **characterized in that** the alternating signal is periodic.

6. Image-projecting system according to Claim 5, **characterized in that** the frequency of the alternating signal is equal to half the frequency of projection of the frames of the image.

7. Display, in particular head-up display, **characterized in that** it comprises an image-projecting system according to one of the preceding claims.

8. Image-projecting method, said method comprising a step of emitting a light beam (10) and a step of forming an image from said light beam (10), said step of forming an image being decomposed into a plurality of successive sub-steps of projecting frames of the image, **characterized in that** said method comprises a step of attenuating the light beam (10) by driving an alternating signal between two voltage levels of equal absolute values and of opposite signs, the alternating signal being switched from one voltage level to the next between the successive sub-steps of projecting frames of the image.
